# EUROPEAN PATENT SPECIFICATION

(11) **EP 2 594 867 B1**
(45) Date of publication and mention of the grant of the patent: **10.01.2018**
(21) Application number: 12192076.3
(22) Date of filing: 09.11.2012
(51) Int. Cl.: F24D 3/18, F25B 47/00, F25B 7/00, F25B 25/00

(54) **Refrigeration cycle apparatus and hot water producing apparatus**
Kühlzyklusvorrichtung und Heißwasser erzeugende Vorrichtung
Appareil de cycle de réfrigération et appareil de production d'eau chaude

(30) Priority: 15.11.2011 JP 2011249264
(43) Date of publication of application: 22.05.2013
(73) Proprietor: Panasonic Corporation, Osaka 571-8501 (JP)
(72) Inventor: Moriwaki, Shunji, Chuo-ku, Osaka 540-6207 (JP); Matsui, Masaru, Chuo-ku, Osaka 540-6207 (JP); Aoyama, Shigeo, Chuo-ku, Osaka 540-6207 (JP)
(74) Representative: Eisenführ Speiser

(56) References cited:
- JP-A- 2010 196 951
- US-A1- 2010 326 109

## Description

### [Technical Field]

The present invention relates to a refrigeration cycle apparatus and a hot water producing apparatus composed of a cascade refrigeration cycle in which a low temperature-side refrigerant circuit and a high temperature-side refrigerant circuit are connected to each other through a cascade heat exchanger.

### [Background Technique]

In a conventional refrigeration cycle apparatus of this kind, a cascade refrigeration cycle is used for producing high temperature hot air or hot water (e.g., see patent document 1). A refrigeration cycle apparatus according to the preamble of claim 1 is disclosed in patent document D1.

Fig. 5 shows a conventional refrigeration cycle apparatus described in the patent document 1. As shown in Fig. 5, the refrigeration cycle apparatus 100 includes a low temperature-side refrigerant circuit 110 through which a low temperature-side refrigerant is circulated, a high temperature-side refrigerant circuit 120 through which a high temperature-side refrigerant is circulated, and a hot water circuit 130 through which hot water is circulated. The low temperature-side refrigerant circuit 110 is formed by sequentially annularly connecting, to each other through refrigerant pipes, a low temperature-side compressor 111, a cascade heat exchanger 112, a low temperature-side expansion valve 113 and an evaporator 114. The cascade heat exchanger 112 exchanges heat with a high temperature-side refrigerant and functions as a condenser.

The high temperature-side refrigerant circuit 120 is formed by sequentially annularly connecting, to one another through refrigerant pipes, a high temperature-side compressor 121, a high temperature-side heat exchanger 122, a high temperature-side expansion valve 123 and the cascade heat exchanger 112. The high temperature-side heat exchanger 122 exchanges heat with hot water and functions as a condenser. The cascade heat exchanger 112 exchanges heat with a low temperature-side refrigerant and functions as an evaporator.

The hot water circuit 130 is formed by sequentially annularly connecting, to one another through pipes, a circulation pump 131, the high temperature-side heat exchanger 122 and a radiator 132 such as a hot water tank and a fan convector. The high temperature-side heat exchanger 122 exchanges heat with a high temperature-side refrigerant to produce hot water.

The refrigeration cycle apparatus 100 includes a pressure sensor 151 which detects pressure (compressor discharge pressure) Pd of a refrigerant discharged from the low temperature-side compressor 111. When the low temperature-side compressor 111 and the high temperature-side compressor 121 are to be started from their stopped states, a compressor controller 141 first starts the low temperature-side compressor 111, and after the discharge pressure Pd detected by the pressure sensor 151 becomes equal to or higher than predetermined pressure, the compressor controller 141 starts the high temperature-side compressor 121.

### [Prior Art Document]

### [Patent Document]

[Patent Document 1] Japanese Patent Application Laid-open No.2010-196951

### [Summary of the Invention]

### [Problem to be Solved by the Invention]

According to the conventional configuration, however, after a long-time operation stopped state, in a state where a temperature of hot water heated by the high temperature-side refrigerant by heat accumulation of the hot water tank or the like is high, a condensation temperature in the high temperature-side heat exchanger is high, and an evaporation temperature in the cascade heat exchanger is high due to an antecedent operation of the low temperature-side compressor. Hence, in the case of a high pressure shell type high temperature-side compressor, when the compressor starts, the high temperature-side discharge pressure abruptly rises.

On the other hand, a shell temperature of the high temperature-side compressor gradually rises from a low temperature due to its long-time stopped state. Hence, the discharged refrigerant condenses in the shell of the high temperature-side compressor and becomes a liquid refrigerant, it is mixed with oil in the shell of the high temperature-side compressor and in this state, a large amount of liquid refrigerant is discharged from the compressor into a system. As a result, an oil amount of the high temperature-side compressor becomes insufficient. In the worst case, there is a possibility that the high temperature-side compressor is damaged, and reliability of the apparatus can not be secured.

To prevent oil from being discharged when the high temperature-side compressor is started caused by condensation of a refrigerant in the shell of the high temperature-side compressor, the shell of the high temperature-side compressor which is under suspension is heated by a heater, and a shell temperature of the high temperature-side compressor is previously maintained at a high value. In such a case, extremely large standby electricity is consumed, and energy-saving performance is deteriorated.

The present invention has been accomplished to solve the conventional problem, and it is an object of the invention to provide an energy-saving reliable refrigeration cycle apparatus capable of avoiding oil shortage of the high temperature-side compressor by appropriately starting the high pressure shell type high temperature-side compressor.

### [Means for Solving the Problem]

To solve the conventional problem, the present invention provides a refrigeration cycle apparatus comprising: a low temperature-side refrigerant circuit including a low temperature-side compressor which compresses a low temperature-side refrigerant, a cascade heat exchanger which functions as a radiator of the low temperature-side refrigerant, low temperature-side expanding means, and a low temperature-side heat exchanger which functions as an evaporator of the low temperature-side refrigerant; a high temperature-side refrigerant circuit including a high temperature-side compressor which compresses a high temperature-side refrigerant, a high temperature-side heat exchanger which functions as a radiator of the high temperature-side refrigerant, high temperature-side expanding means, and the cascade heat exchanger which functions as an evaporator of the high temperature-side refrigerant by radiation of the low temperature-side refrigerant; a first temperature sensor which detects a temperature of the high temperature-side compressor or a temperature of a high pressure-side refrigerant pipe extending to the high temperature-side heat exchanger; a second temperature sensor which detects a temperature of a heating medium which exchanges heat with the high temperature-side refrigerant in the high temperature-side heat exchanger; and a control apparatus, wherein when a temperature detected by the second temperature sensor is higher than a temperature detected by the first temperature sensor by a predetermined temperature difference or more, the control apparatus is configured to start the high temperature-side compressor and then, to start the low temperature-side compressor and wherein the refrigeration cycle apparatus further comprises a first superheat degree detecting means which detects a superheat degree of a refrigerant discharged from the high temperature-side compressor in the high temperature-side refrigerant circuit, and wherein the control apparatus is configured to reduce a circulation amount of the high temperature-side refrigerant to a value equal to or lower than a predetermined value and to operate the refrigeration cycle apparatus until the superheat degree detected by the first superheat degree detecting means exceeds a predetermined first superheat degree.

According to this configuration, since the low temperature-side refrigerant circuit is stopped when the refrigeration cycle apparatus is started, a heat absorbing source of the high temperature-side refrigerant circuit is not supplied in the cascade heat exchanger. Suction pressure of the high temperature-side compressor is reduced, and a refrigerant circulation amount of the high temperature-side refrigerant circuit is reduced.

Therefore, since a shell temperature of the high temperature-side compressor rises in a state where discharge pressure rise of the high temperature-side compressor is suppressed, condensation of a refrigerant in the shell of the high temperature-side compressor is suppressed, and an oil discharging amount is reduced.

### [Effect of the Invention]

According to the present invention, it is possible to provide an energy-saving reliable refrigeration cycle apparatus capable of avoiding oil shortage of a high temperature-side compressor by appropriately starting the high temperature-side compressor and a low temperature-side compressor.

### [Brief Description of the Drawings]

Fig. 1 is a schematic block diagram of a refrigeration cycle apparatus according to a first embodiment of the present invention;
Fig. 2 is a diagram showing change with the passage of time of a refrigeration cycle when an operation of a conventional refrigeration cycle apparatus is started;
Fig. 3 is a diagram showing change with the passage of time of a refrigeration cycle when an operation of a refrigeration cycle apparatus of the first embodiment of the invention is started;
Fig. 4 is a flowchart of operation control of the refrigeration cycle apparatus of the first embodiment of the invention; and

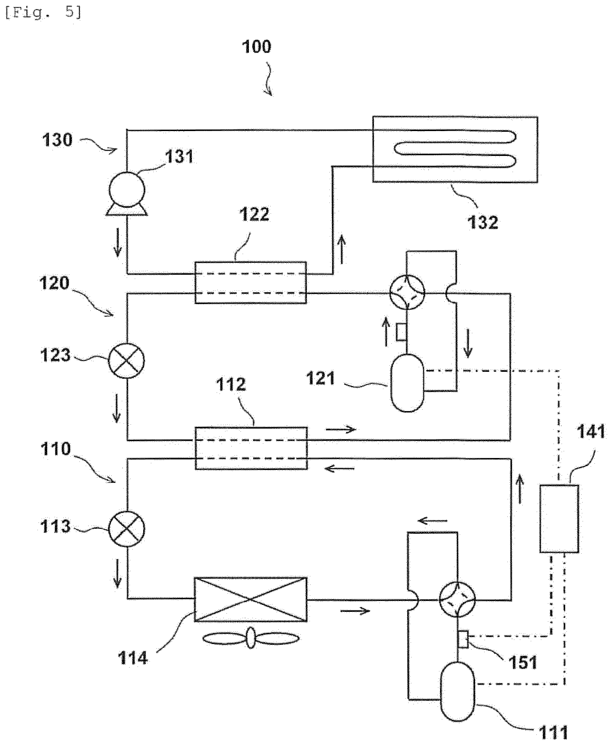

Fig. 5 is a schematic block diagram of the conventional refrigeration cycle apparatus.

### [Explanation of Symbols]

1A refrigeration cycle apparatus
2 low temperature-side refrigerant circuit
3 high temperature-side refrigerant circuit
4 control apparatus
21 low temperature-side compressor
22 cascade heat exchanger
23 low temperature-side expansion valve (low temperature-side expanding means)
24 low temperature-side heat exchanger
31 high temperature-side compressor
32 high temperature-side heat exchanger
33 high temperature-side expansion valve (high temperature-side expanding means)
51 first temperature sensor
52 second temperature sensor
53 third temperature sensor
61 first superheat degree detecting means
62 second superheat degree detecting means

### [Mode for Carrying out the Invention]

A first aspect of the invention provides a refrigeration cycle apparatus comprising: a low temperature-side refrigerant circuit including a low temperature-side compressor which compresses a low temperature-side refrigerant, a cascade heat exchanger which functions as a radiator of the low temperature-side refrigerant, low temperature-side expanding means, and a low temperature-side heat exchanger which functions as an evaporator of the low temperature-side refrigerant; a high temperature-side refrigerant circuit including a high temperature-side compressor which compresses a high temperature-side refrigerant, a high temperature-side heat exchanger which functions as a radiator of the high temperature-side refrigerant, high temperature-side expanding means, and the cascade heat exchanger which functions as an evaporator of the high temperature-side refrigerant by radiation of the low temperature-side refrigerant; a first temperature sensor which detects a temperature of the high temperature-side compressor or a temperature of a high pressure-side refrigerant pipe extending to the high temperature-side heat exchanger; a second temperature sensor which detects a temperature of a heating medium which exchanges heat with the high temperature-side refrigerant in the high temperature-side heat exchanger; and a control apparatus, wherein when a temperature detected by the second temperature sensor is higher than a temperature detected by the first temperature sensor by a predetermined temperature difference or more, the control apparatus starts the high temperature-side compressor and then, starts the low temperature-side compressor.

Moreover, the refrigeration cycle apparatus further includes a first superheat degree detecting means which detects a superheat degree of a refrigerant discharged from the high temperature-side compressor in the high temperature-side refrigerant circuit, and the control apparatus reduces a circulation amount of the high temperature-side refrigerant to a value equal to or lower than a predetermined value and operates the refrigeration cycle apparatus until the superheat degree detected by the first superheat degree detecting means exceeds a predetermined first superheat degree.

Since the refrigeration cycle of the low temperature-side refrigerant circuit is stopped when the refrigeration cycle apparatus is started, a heat absorbing source of the refrigeration cycle of the high temperature-side refrigerant circuit is not supplied in the cascade heat exchanger. Suction pressure of the high temperature-side compressor is reduced, and a refrigerant circulation amount of the high temperature-side refrigerant circuit is reduced.

Hence, since a shell temperature of the high temperature-side compressor rises in a state where discharge pressure rise of the high temperature-side compressor is suppressed, condensation of a refrigerant in the shell of the high temperature-side compressor is suppressed, and an oil discharging amount is reduced.

Therefore, it is possible to avoid a case where the high temperature-side compressor is damaged by reduction in oil amount in the high temperature-side compressor, standby electricity required for heating a shell of the high temperature-side compressor which is under suspension can be suppressed, and reliability of the apparatus can be secure.

Additionally, the refrigeration cycle apparatus is operated in a state where a circulation amount of the high temperature-side refrigerant is small until the discharged refrigerant of the high temperature-side compressor is brought into the superheated state in which it is possible to determine that condensation of the discharged refrigerant in the shell of the high temperature-side compressor is completed. Hence, a discharge amount of oil mixed with a condensed liquid refrigerant in the shell of the high temperature-side compressor is further reduced.

Therefore, in addition to the effect explained above, reliability can be secured under various installation conditions such as a condition that a pipe is long.

According to a second aspect of the invention, in the first aspect, the refrigeration cycle apparatus further includes a third temperature sensor which detects a temperature a low pressure-side refrigerant in the high temperature-side refrigerant circuit, and when a temperature detected by the third temperature sensor becomes equal to or lower than a predetermined temperature, the control apparatus starts the low temperature-side compressor.

According to this aspect, it is determined that the evaporator temperature of the refrigeration cycle in the high temperature-side refrigerant circuit is lowered to a temperature equal to or lower than the predetermined temperature, and the operation of the refrigeration cycle in the low temperature-side refrigerant circuit is started. Hence, the heat absorbing source of the refrigeration cycle in the high temperature-side refrigerant circuit is supplied in the cascade heat exchanger. Therefore, it is possible to prevent the suction pressure of the high temperature-side compressor from being excessively reduced.

Therefore, it is possible to prevent the operation of the high temperature-side compressor from departing from a pressure using range and in addition to the effect of the first aspect, reliability of the high temperature-side compressor is further enhanced.

According to a third aspect of the invention, in any one of the first to second aspects, the refrigeration cycle apparatus further includes second superheat degree detecting means which detects a superheat degree of a refrigerant flowing out from the cascade heat exchanger in the high temperature-side refrigerant circuit, and the control apparatus controls a flow rate of the high temperature-side refrigerant flowing through the high temperature-side expanding means such that the superheat degree detected by the second superheat degree detecting means becomes equal to a predetermined second superheat degree.

According to this aspect, the expansion valve is controlled such that the superheat degree of the evaporator outlet of the refrigeration cycle in the high temperature-side refrigerant circuit becomes equal to a predetermined superheat degree (e.g., large superheat degree such as 10 deg). Therefore, the sucked refrigerant of the high temperature-side compressor is brought into a superheated state.

Hence, the shell temperature of the high temperature-side compressor rises quickly, and an oil discharging phenomenon caused by condensation of a refrigerant in the shell is completed in a short time. Therefore, in addition to the effects of the first to second aspects, since the refrigeration cycle swiftly starts, comfort is enhanced.

A fourth aspect of the invention provides a hot water producing apparatus using the refrigeration cycle apparatus according to any one of the first to third aspects, the heating medium is water or antifreeze liquid, and the water or the antifreeze liquid heated by the high temperature-side heat exchanger is utilized for hot water supply and/or a room-heating.

According to this configuration, the radiator may be any of a refrigerant-water heat exchanger and a refrigerant-antifreeze liquid heat exchanger. Therefore, a heating medium which is heated by the high temperature-side heat exchanger can widely be used for a heater (air heater, radiator, floor heating panel and the like).

Embodiments of the present invention will be described below with reference to the drawings. The invention is not limited to the embodiments.

### (First Embodiment)

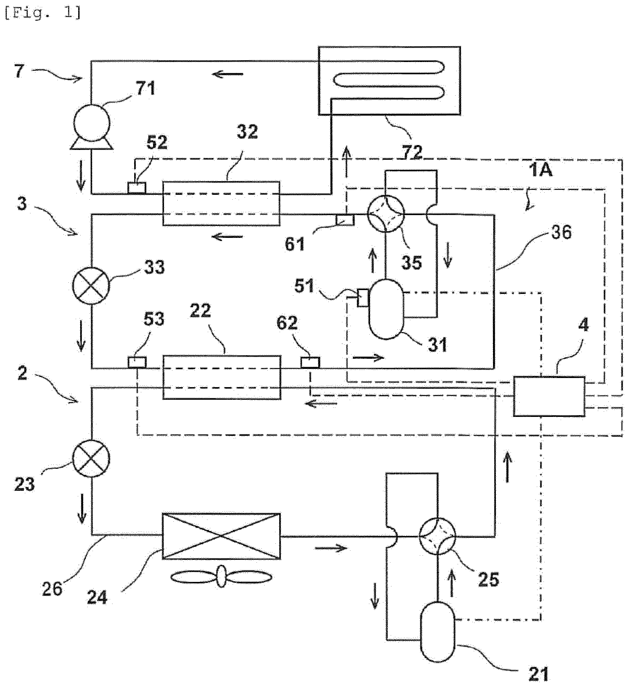

Fig. 1 is a schematic block diagram of a refrigeration cycle apparatus and a hot water producing apparatus according to a first embodiment of the present invention. In Fig. 1, the refrigeration cycle apparatus 1A includes a low temperature-side refrigerant circuit 2 through which a low temperature-side refrigerant is circulated, and a high temperature-side refrigerant circuit 3 through which a high temperature-side refrigerant is circulated. As the refrigerant, it is possible to use a zeotropic mixture refrigerant such as R407C, a pseudo-azeotropic mixture refrigerant such as R410A and a single refrigerant such as R134a.

The low temperature-side refrigerant circuit 2 is formed by sequentially annularly connecting, to each other through refrigerant pipes 26, a high pressure shell type low temperature-side compressor 21, a cascade heat exchanger 22, a low temperature-side expansion valve (low temperature-side expanding means) 23 and a low temperature-side heat exchanger 24. The cascade heat exchanger 22 exchanges heat with a high temperature-side refrigerant and functions as a condenser. The low temperature-side heat exchanger 24 functions as an evaporator. In this embodiment, a four-way valve 25 is connected to a refrigerant circuit 2. The four-way valve 25 switches the refrigerant pipe 26 connected to a discharge port of a low temperature-side compressor 21 between the cascade heat exchanger 22 and the low temperature-side heat exchanger 24, and switches the refrigerant pipe 26 connected to a suction port of the low temperature-side compressor 21 between an evaporator 24 and a radiator 22. The four-way valve 25 switches between a normal operation and a defrosting operation.

The high temperature-side refrigerant circuit 3 is formed by sequentially annularly connecting, to one another through refrigerant pipes 36, a high pressure shell type high temperature-side compressor 31, a high temperature-side heat exchanger 32, a high temperature-side expansion valve (high temperature-side expanding means) 33 and the cascade heat exchanger 22. The high temperature-side heat exchanger 32 functions as a condenser. The cascade heat exchanger 22 exchanges heat with a low temperature-side refrigerant and functions as an evaporator. In this embodiment, a four-way valve 35 is connected to a refrigerant circuit 3. The four-way valve 35 switches the refrigerant pipe 36 connected to a discharge port of the high temperature-side compressor 31 between a high temperature-side heat exchanger 32 and the cascade heat exchanger 22, and switches the refrigerant pipe 36 connected to a suction port of the high temperature-side compressor 31 between the high temperature-side heat exchanger 32 and the cascade heat exchanger 22. The four-way valve 35 switches between a normal operation and a defrosting operation.

In this embodiment, the refrigeration cycle apparatus 1A constitutes heating means of a hot water producing apparatus which utilizes hot water produced by the heating means for hot water supply and a room-heating. The high temperature-side heat exchanger 32 is a heat exchanger which exchanges heat between water and a high temperature-side refrigerant to heat the water.

More specifically, the refrigeration cycle apparatus 1A includes a hot water circuit 7 formed by annularly connecting, to one another through pipes, a high temperature-side heat exchanger 32, a hot water pump 71 and a radiator 72 such as a hot water tank and a fan convector. Hot water heated by the high temperature-side heat exchanger 32 radiates heat in the radiator 72, and heat accumulation and room-heating is carried out.

In the normal operation, in the low temperature-side refrigerant circuit 2, a refrigerant discharged from the low temperature-side compressor 21 is sent to the cascade heat exchanger 22 through the four-way valve 25, and in the high temperature-side refrigerant circuit 3, a refrigerant discharged from the high temperature-side compressor 31 is sent to the high temperature-side heat exchanger 32 through the four-way valve 35. In the defrosting operation, in the low temperature-side refrigerant circuit 2, a refrigerant discharged from the low temperature-side compressor 21 is sent to the low temperature-side heat exchanger 24 through the four-way valve 25, and in the high temperature-side refrigerant circuit 3, a refrigerant discharged from the high temperature-side compressor 31 is sent to the cascade heat exchanger 22 through the four-way valve 35.

A variation of a state of a refrigerant in the normal operation will be described below. In Fig. 1, arrows show flowing directions of the refrigerant at the time of the normal operation.

In the low temperature-side refrigerant circuit 2, a high pressure low temperature-side refrigerant discharged from the low temperature-side compressor 21 flows into the cascade heat exchanger 22. The high pressure low temperature-side refrigerant exchanges heat with a low pressure high temperature-side refrigerant in the refrigeration cycle which circulates through the high temperature-side refrigerant circuit 3, and radiates heat.

The high pressure low temperature-side refrigerant which flows out from the cascade heat exchanger 22 is decompressed by a low temperature-side expansion valve 23 and is expanded and then, the refrigerant flows into the low temperature-side heat exchanger 24. The low pressure low temperature-side refrigerant which flows into the low temperature-side heat exchanger 24 absorbs heat from air here, and evaporates. The low pressure low temperature-side refrigerant evaporated in the low temperature-side heat exchanger 24 is again sucked into the low temperature-side compressor 21.

In the high temperature-side refrigerant circuit 3, on the other hand, a low pressure high temperature-side refrigerant in the refrigeration cycle which circulates through the high temperature-side refrigerant circuit 3 is heated by heat radiation of the low temperature-side refrigerant in the cascade heat exchanger 22, and the high temperature-side refrigerant is evaporated. The low pressure high temperature-side refrigerant evaporated in the cascade heat exchanger 22 is sucked into the high temperature-side compressor 31, and this high temperature-side refrigerant is compressed to possible high pressure in the refrigeration cycle and then, is discharged.

The high pressure high temperature-side refrigerant discharged from the high temperature-side compressor 31 flows into the high temperature-side heat exchanger 32, exchanges heat with a water medium which circulates through the hot water circuit 7 by the hot water pump 71, and radiates heat. The high pressure high temperature-side refrigerant which flows out from the high temperature-side heat exchanger 32 is decompressed by the high temperature-side expansion valve 33 and expanded and then, again flows into the cascade heat exchanger 22.

As described above, the refrigeration cycle apparatus 1A of the embodiment has such a configuration that the low pressure high temperature-side refrigerant which circulates through the high temperature-side refrigerant circuit 3 is heated by radiation of the high pressure low temperature-side refrigerant which circulates through the low temperature-side refrigerant circuit 2. A condensation temperature of the refrigeration cycle in the high temperature-side refrigerant circuit 3 can be higher than a condensation temperature of the refrigeration cycle in the low temperature-side refrigerant circuit 2. Therefore, it is possible to obtain a high temperature water medium by the radiation of the high temperature-side refrigerant in the high temperature-side heat exchanger 32.

However, in a state where a temperature of the water medium is higher than a shell temperature of the high temperature-side compressor 31 and a temperature difference therebetween is large (for example, a heating operation for bringing a water medium into a high temperature state by the refrigeration cycle apparatus 1A is carried out and after the high temperature-side compressor 31 is stopped due to thermostat OFF, the shell temperature of the high temperature-side compressor 31 is lowered to a temperature close to ambient temperature), if the heating operation is started, a large amount of oil in the high temperature-side compressor 31 is discharged, and the high temperature-side compressor 31 is damaged due to oil supply failure in the high temperature-side compressor 31.

Under the above described environment condition, if the low temperature-side compressor 21 and the high temperature-side compressor 31 are operated by start of the heating operation, since the temperature of the water medium which radiates heat is high in the high temperature-side heat exchanger 32 and since a heat absorbing source is sufficiently supplied by the high pressure low temperature-side refrigerant which circulates through the low temperature-side refrigerant circuit 2 in the cascade heat exchanger 22, discharge pressure in the high temperature-side compressor 31 abruptly rises.

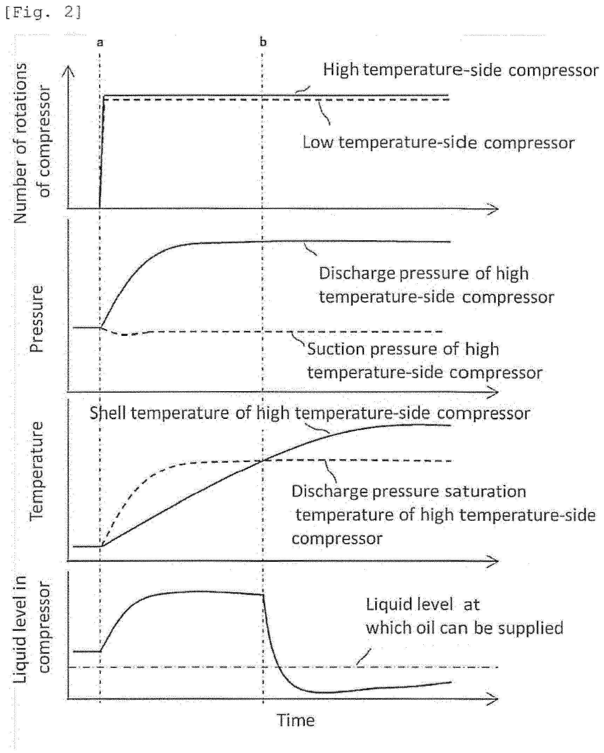

On the other hand, the shell temperature of the high temperature-side compressor 31 is increased by the compressing operation, but the shell temperature gradually rises from the ambient temperature of the high temperature-side compressor 31 due to heat capacity of the high temperature-side compressor 31 itself. Hence, the shell temperature of the high temperature-side compressor 31 becomes lower than the discharge pressure saturation temperature as shown in a section a-b in Fig. 2, the high temperature-side refrigerant discharged in the high temperature-side compressor 31 exchanges heat with the shell of the high temperature-side compressor 31, and the high temperature-side refrigerant is condensed.

The high temperature-side refrigerant which becomes a liquid refrigerant by condensation is mixed with oil in the high temperature-side compressor 31, and a large amount of the mixture is discharged from the high temperature-side compressor 31 due to a rise of a liquid level (oil + liquid refrigerant) while diluting the oil in the shell. Thereafter, if the shell temperature of the high temperature-side compressor 31 becomes higher than the discharge pressure saturation temperature as shown in Fig. 2 after b, since a refrigerant component in the diluted oil is evaporated, the liquid level is lowered at once, and the liquid level becomes lower than a level at which oil can be supplied.

In the above-described environment condition, to prevent a large amount of oil in the high temperature-side compressor 31 from being discharged, if the shell of the high temperature-side compressor 31 which is under suspension is heated using a heating source such as a heater, standby electricity becomes large, and energy-saving performance is deteriorated.

To produce a high temperature water medium by the hot water producing apparatus, to use the hot water producing apparatus and the refrigeration cycle apparatus in wide usage or under wide environment condition, and to secure energy-saving performance of the hot water producing apparatus and the refrigeration cycle apparatus and reliability of the apparatuses, it is important to restrain oil from being discharged at the time of starting operation of the apparatus.

Although details will be described later, in the embodiment, when the heating operation is started in a state where a temperature of a water medium is higher than a shell temperature of the high temperature-side compressor 31 by a predetermined temperature, the control apparatus 4 starts only the high temperature-side compressor 31 in a state where the low temperature-side compressor 21 is stopped. At this time, the heating operation is carried out in a state where the number of rotations of the high temperature-side compressor 31 is reduced such that the circulation amount of the high temperature-side refrigerant becomes equal to or lower than a predetermined circulation amount.

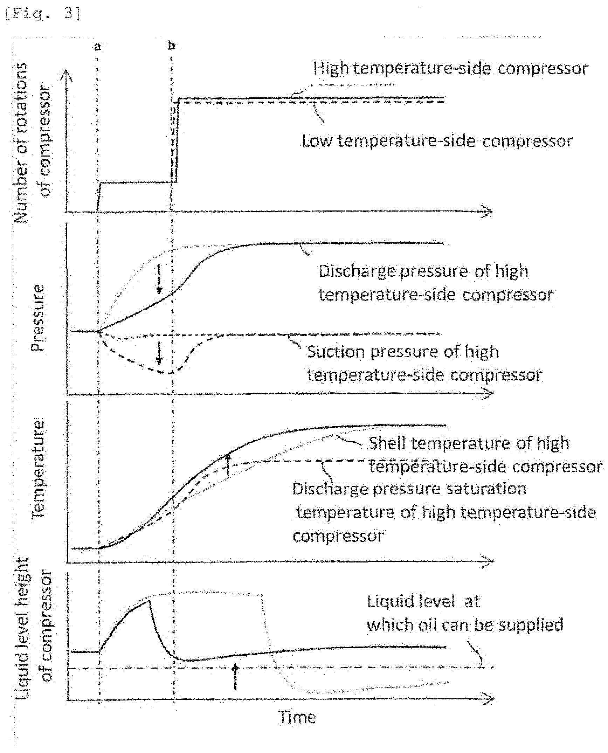

The control apparatus 4 controls the high temperature-side expansion valve 33 such that a superheat degree of a refrigerant flowing out from the cascade heat exchanger 22 in the high temperature-side refrigerant circuit 3 becomes equal to a predetermined superheat degree. According to this configuration, as shown in a section a-b in Fig. 3, in the cascade heat exchanger 22, since a heat absorbing source is not supplied from the low temperature-side refrigerant circuit 2, suction pressure in the high temperature-side compressor 31 is reduced, the high temperature-side compressor 31 is operated with low number of rotations, the circulation amount is reduced and the rising speed of the discharge pressure is reduced.

The high temperature-side compressor 31 sucks a superheated refrigerant and according to this suction, the rising speed of the shell temperature of the high temperature-side compressor 31 rises. Hence, condensation of the discharged refrigerant in the shell of the high temperature-side compressor 31 is completed in a short time, the discharged refrigerant is mixed with condensed liquid refrigerant and an amount of oil flowing into a system is largely reduced.

The control apparatus 4 detects a temperature (evaporation temperature) of an inlet of the cascade heat exchanger 22 in which a high temperature-side refrigerant in the high temperature-side refrigerant circuit 3 is brought into gas-liquid two phase-state. When the evaporation temperature is reduced to a predetermined temperature which is set to such a level that suction pressure of the high temperature-side compressor 31 does not depart from a pressure using range of the high temperature-side compressor, the control apparatus 4 starts the low temperature-side compressor 21, a heat absorbing source is supplied to the high temperature-side refrigerant from a high pressure high temperature low temperature-side refrigerant which is discharged from the low temperature-side compressor 21 in the cascade heat exchanger 22, and the suction pressure is increased to appropriate pressure.

Therefore, since an oil amount in the high temperature-side compressor at the time of start is held without using a heating heater of the shell of the high temperature-side compressor 31, the energy-saving performance and reliability of the refrigeration cycle apparatus 1A are secured.

Action of operation control will be described below.

The high temperature-side refrigerant circuit 3 is provided with a first temperature sensor 51 which detects a shell temperature (high temperature-side compressor swell temperature) Td of the high temperature-side compressor 31, first superheat degree detecting means 61 which detects a superheat degree (high temperature-side discharge superheat degree) SHd of a refrigerant discharged from the high temperature-side compressor 31, a third temperature sensor 53 which detects a temperature (high temperature-side evaporation temperature) Tei of a refrigerant flowing into the cascade heat exchanger 22, and second superheat degree detecting means 62 which detects a superheat degree (high temperature-side suction superheat degree) SHe of a refrigerant flowing out from the cascade heat exchanger 22.

The hot water circuit 7 is provided with a second temperature sensor 52 which detects a temperature (hot water inlet temperature) Tw of a water medium flowing into the high temperature-side heat exchanger 32. In this embodiment, the first superheat degree detecting means 61 detects pressure of a refrigerant discharged from the high temperature-side compressor 31, and calculates a saturation temperature (discharge pressure saturation temperature) STd of this pressure from a refrigerant physical property equation.

The high temperature-side discharge superheat degree SHd is calculated by SHd=Td-STd. The second superheat degree detecting means 62 detects a temperature Teo of a refrigerant flowing out from the cascade heat exchanger 22, and calculates the high temperature-side suction superheat degree SHe by SHe=Teo-Tei.

Based on detection values detected by the various sensors 51, 52, 53, 61 and 62, the control apparatus 4 controls the number of rotations of the low temperature-side compressor 21, the number of rotations of the high temperature-side compressor 31, switching operations of the low temperature-side four-way valve 25 and the high temperature-side four-way valve 35, and opening degrees of the low temperature-side expansion valve 23 and the high temperature-side expansion valve 33.

In this embodiment, when the hot water inlet temperature Tw is higher than the high temperature-side compressor shell temperature Td by a predetermined temperature difference Tx or more, the control apparatus 4 starts the high temperature-side compressor 31 and then starts the low temperature-side compressor 21.

When the high temperature-side evaporation temperature Tei becomes equal to or lower than a predetermined temperature difference Tx, the control apparatus 4 starts the low temperature-side compressor 21.

Until the high temperature-side discharge superheat degree SHd exceeds a predetermined first superheat degree SHx, the control apparatus 4 reduces the number of rotations of the high temperature-side compressor 31 to a predetermined value or smaller and operates the high temperature-side compressor 31.

The control apparatus 4 adjusts a valve opening degree of the high temperature-side expansion valve 33 such that the high temperature-side suction superheat degree SHe becomes equal to a predetermined second superheat degree SHy.

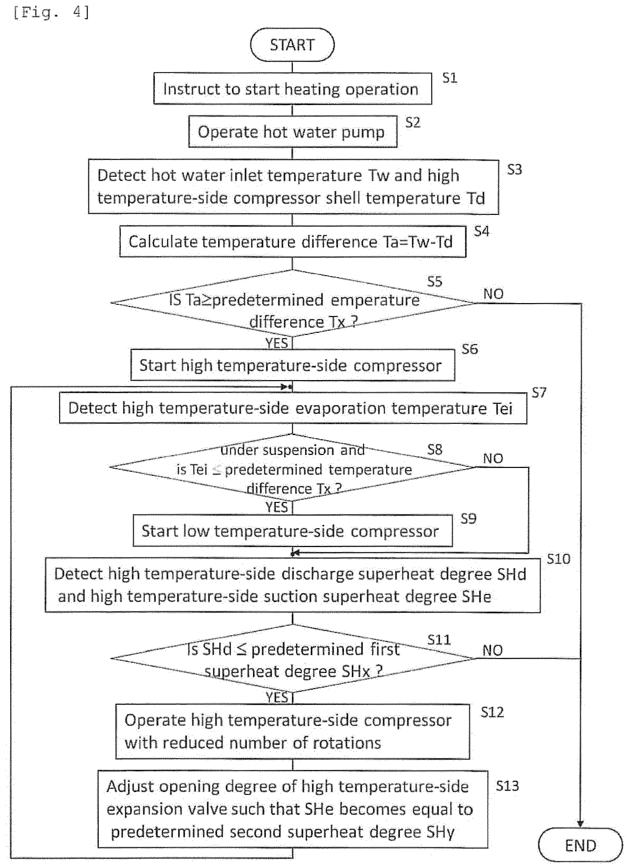

Next, control of the control apparatus 4 at the time of the normal operation will be described in detail with reference to a flowchart shown in Fig. 4.

First, the control apparatus 4 receives heating operation start instructions which are input through a remote control or the like (step 1 (S1)), and operates the hot water pump 71 (step 2).

Next, the second temperature sensor 52 detects the hot water inlet temperature Tw, the first temperature sensor 51 detects the high temperature-side compressor shell temperature Td (step 3), and a temperature difference Ta between the hot water inlet temperature Tw and the high temperature-side compressor shell temperature Td is calculated by Ta=Tw-Td (step 4) .

Next, the control apparatus 4 compares the temperature difference Ta and the predetermined temperature difference Tx with each other, and determines whether the temperature difference Ta is equal to or higher than the predetermined temperature difference Tx (step 5).

If the temperature difference Ta is lower than the predetermined temperature difference Tx (NO in step 5), it is determined that a high temperature-side discharged refrigerant is not easily condensed in the shell of the high temperature-side compressor 31, and the start control is completed.

If the temperature difference Ta is equal to or higher than the predetermined temperature difference Tx (YES in step 5), it is determined that the high temperature-side discharged refrigerant is easily condensed in the shell of the high temperature-side compressor 31, and only the high temperature-side compressor 31 is started (step 6).

Thereafter, the third temperature sensor 53 detects the high temperature-side evaporation temperature Tei (step 7), the control apparatus 4 compares the high temperature-side evaporation temperature Tei and the predetermined temperature difference Tx with each other, and determines whether the high temperature-side evaporation temperature Tei is equal to or lower than the predetermined temperature difference Tx, and determines whether the low temperature-side compressor 21 is being stopped (step 8).

If the high temperature-side evaporation temperature Tei is equal to or lower than the predetermined temperature difference Tx and the low temperature-side compressor 21 is being stopped (YES in step 8), it is determined that suction pressure of the high temperature-side compressor 31 is close to a lower limit of a pressure using range of the high temperature-side compressor 31, the low temperature-side compressor 21 is started, and a high temperature high pressure low temperature-side refrigerant is supplied to the cascade heat exchanger 22 as a heat absorbing source (step 9).

If the high temperature-side evaporation temperature Tei is higher than the predetermined temperature difference Tx or if the low temperature-side compressor 21 is being operated (NO in step 8), the procedure is proceeded to step 10.

Next, the control apparatus 4 detects the high temperature-side discharge superheat degree SHd by means of the first superheat degree detecting means 61, and detects the high temperature-side suction superheat degree SHe by means of the second superheat degree detecting means 62 (step 10).

The high temperature-side discharge superheat degree SHd and the predetermined first superheat degree SHx are compared with each other, and it is determined whether the high temperature-side discharge superheat degree SHd is equal to or lower than the predetermined first superheat degree SHx (step 11). If the high temperature-side discharge superheat degree SHd is greater than the predetermined first superheat degree SHx (NO in step 11), it is determined that condensation of the high temperature-side discharged refrigerant in the shell of the high temperature-side compressor 31 is completed, and the start control is completed.

If the high temperature-side discharge superheat degree SHd is equal to or lower than the predetermined first superheat degree SHx (YES in step 11), it is determined that it is necessary to prevent condensation of a refrigerant in the shell of the high temperature-side compressor 31, the number of rotations of the high temperature-side compressor 31 is reduced such that a refrigerant circulation amount in the high temperature-side refrigerant circuit 3 becomes equal to or lower than a predetermined value and the high temperature-side compressor 31 is operated (step 12), and the opening degree of the high temperature-side expansion valve 33 is adjusted such that the high temperature-side suction superheat degree SHe becomes equal to the predetermined second superheat degree SHy (step 13). Then, the procedure is returned to step 7.

As described above, in this embodiment, the refrigeration cycle apparatus includes the control apparatus 4, the first temperature sensor 51 which detects a shell temperature of the high temperature-side compressor 31 in the high temperature-side refrigerant circuit 3, the first superheat degree detecting means 61 which detects a superheat degree of a refrigerant discharged from the high temperature-side compressor, the third temperature sensor 53 which detects a temperature of a refrigerant flowing into the cascade heat exchanger 22, the second superheat degree detecting means 62 which detects a superheat degree of a refrigerant flowing out from the cascade heat exchanger 22, and the second temperature sensor 52 which detects a hot water inlet temperature Tw of a water medium flowing into the high temperature-side heat exchanger 32 in the hot water circuit 7.

At the time of start of the operation when a temperature detected by the second temperature sensor 52 becomes higher than a temperature detected by the first temperature sensor 51 by the predetermined temperature difference Tx or more, the control apparatus 4 performs control such that the high temperature-side compressor 31 is started and then, the low temperature-side compressor 21 is started. According to this control, when the operation is started, since the refrigeration cycle in the low temperature-side refrigerant circuit 2 is stopped, a heat absorbing source of the refrigeration cycle in the high temperature-side refrigerant circuit 3 is not supplied in the cascade heat exchanger 22. Therefore, suction pressure of the high temperature-side compressor 31 is reduced, and the refrigerant circulation amount of the high temperature-side refrigerant circuit 3 is reduced.

According to this configuration, since a shell temperature of the high temperature-side compressor 31 rises in a state where discharge pressure of the high temperature-side compressor 31 is restrained from rising, condensation of a refrigerant in the shell of the high temperature-side compressor 31 is suppressed, and an oil discharge amount is reduced.

Therefore, it is possible to avoid a case where the high temperature-side compressor is damaged by reduction in oil amount in the high temperature-side compressor, and it is possible to suppress the standby electricity consumed for heating, by a heater, the shell of the high temperature-side compressor 31 when it is under suspension, and to secure the reliability of the apparatus.

When a temperature detected by the third temperature sensor 53 becomes equal to or lower than a predetermined temperature, the control apparatus 4 controls such that the low temperature-side compressor 21 is started.

According to this control, it is determined that the evaporation temperature of the refrigeration cycle in the high temperature-side refrigerant circuit 3 becomes equal to or lower than the predetermined temperature, and the operation of the refrigeration cycle in the low temperature-side refrigerant circuit 2 is started. Therefore, a heat absorbing source of the refrigeration cycle in the high temperature-side refrigerant circuit 3 is supplied in the cascade heat exchanger 22. Therefore, excessive reduction in suction pressure of the high temperature-side compressor 31 is suppressed.

Therefore, it is possible to prevent the high temperature-side compressor 31 from operating while departing from the pressure using range, and to further enhance the reliability of the high temperature-side compressor 31.

The control apparatus 4 controls such that a circulation amount of a high temperature-side refrigerant becomes equal to or lower than the predetermined value until a superheat degree detected by the first superheat degree detecting means 61 exceeds a predetermined first superheat degree.

According to this control, the refrigeration cycle is operated in a state where the circulation amount of the high temperature-side refrigerant is small until the discharged refrigerant or the high temperature-side compressor 31 is brought into the superheated state where it is possible to determine that condensation of the discharged refrigerant in the shell of the high temperature-side compressor 31 is completed. Hence, a discharge amount of oil which is mixed with a condensed liquid refrigerant in the shell of the high temperature-side compressor 31 is further reduced. Therefore, it is possible to secure the reliability even under various installation conditions such as a condition that a pipe is long.

The control apparatus 4 controls to adjust the opening degree of the high temperature-side expansion valve 33 such that the superheat degree detected by the second superheat degree detecting means 62 becomes equal to a predetermined second superheat degree.

According to this control, since a degree of an evaporator outlet refrigerant of the refrigeration cycle in the high temperature-side refrigerant circuit 3 becomes equal to a predetermined superheat degree, a sucked refrigerant of the high temperature-side compressor 31 is brought into the superheated state. Hence, the shell temperature of the high temperature-side compressor 31 rises quickly, and the oil discharging phenomenon caused by condensation in the shell is completed in a short time. Therefore, the refrigeration cycle is started swiftly and comfort is enhanced.

Although the shell of the high temperature-side compressor 31 is provided with the first temperature sensor 51 in Fig. 1, the first temperature sensor 51 may be disposed anywhere between the high temperature-side compressor 31 and the high temperature-side heat exchanger 32 and on a pipe through which a discharged refrigerant flows.

Although the second temperature sensor 52 is provided on the side of the inlet of the high temperature-side heat exchanger 32 in the hot water circuit 7 in Fig. 1, the second temperature sensor 52 may be disposed anywhere in the hot water circuit 7.

Although the third temperature sensor 53 is provided on the side of the inlet of the cascade heat exchanger 22 in the high temperature-side refrigerant circuit 3 in Fig. 1, the third temperature sensor 53 may be disposed anywhere at a position downstream of the high temperature-side expansion valve 33 in the high temperature-side refrigerant circuit 3 and at a position where the high temperature-side refrigerant is always in the two phase state.

Alternatively, the third temperature sensor 53 may be replaced by a pressure sensor. In this case, a saturation temperature should be calculated from a detection value of the pressure sensor using a refrigerant physical property equation.

Although the first superheat degree detecting means 61 calculates the discharge superheat degree SHd using a detection value of heat exchanger first temperature sensor 51 in the embodiment, the discharge superheat degree SHd may be calculated by detecting pressure and a temperature of the high temperature-side discharged refrigerant.

The second superheat degree detecting means 62 calculates the suction superheat degree SHe based on a temperature difference between the inlet refrigerant temperature and the outlet refrigerant temperature of the cascade heat exchanger 22 in the high temperature-side refrigerant circuit 3. Alternatively, the second superheat degree detecting means 62 may obtain the suction superheat degree SHe by detecting pressure of the low pressure-side refrigerant in the high temperature-side refrigerant circuit 3 and a temperature of the low pressure-side refrigerant between the outlet of the cascade heat exchanger 22 and the refrigerant suction pipe of the high temperature-side compressor 31, and by subtracting a pressure saturation temperature calculated by the refrigerant physical property equation from the detected temperature of the low pressure-side refrigerant.

Although a water medium is heated by the refrigeration cycle in the high temperature-side refrigerant circuit 3 in the embodiment of the invention, a heated medium may be brine or air. The radiator 72 may be an air heater, a radiator or a floor heating panel.

### [Industrial Applicability]

The present invention is especially useful for a hot water producing apparatus which produces hot water by a refrigeration cycle apparatus and which utilizes the hot water for hot water supply or a room-heating.

## Claims

1. A refrigeration cycle apparatus (1A) comprising:
a low temperature-side refrigerant circuit (2) including a low temperature-side compressor (21) which compresses a low temperature-side refrigerant, a cascade heat exchanger (22) which functions as a radiator of the low temperature-side refrigerant, low temperature-side expanding means (23), and a low temperature-side heat exchanger (24) which functions as an evaporator of the low temperature-side refrigerant;
a high temperature-side refrigerant circuit (3) including a high temperature-side compressor (31) which compresses a high temperature-side refrigerant, a high temperature-side heat exchanger (32) which functions as a radiator of the high temperature-side refrigerant, high temperature-side expanding means (33), and the cascade heat exchanger (22) which functions as an evaporator of the high temperature-side refrigerant by radiation of the low temperature-side refrigerant;
a first temperature sensor (51) which detects a temperature of the high temperature-side compressor (31) or a temperature of a high pressure-side refrigerant pipe (36) extending to the high temperature-side heat exchanger (32);
a second temperature sensor (52) which detects a temperature of a heating medium which exchanges heat with the high temperature-side refrigerant in the high temperature-side heat exchanger (32); and
a control apparatus (4),
**characterized in that** when a temperature detected by the second temperature sensor (52) is higher than a temperature detected by the first temperature sensor (51) by a predetermined temperature difference or more, the control apparatus (4) is configured to start the high temperature-side compressor (31) and then, to start the low temperature-side compressor (21),
wherein the refrigeration cycle apparatus further comprises a
first superheat degree detecting means (61) which detects a superheat degree of a refrigerant discharged from the high temperature-side compressor (31) in the high temperature-side refrigerant circuit (3), and
wherein the control apparatus (4) is configured to reduce a circulation amount of the high temperature-side refrigerant to a value equal to or lower than a predetermined value and to operate the refrigeration cycle apparatus until the superheat degree detected by the first superheat degree detecting means (61) exceeds a predetermined first superheat degree.

2. The refrigeration cycle apparatus according to claim 1, further comprising a third temperature sensor (53) which detects a temperature of a low pressure-side refrigerant in the high temperature-side refrigerant circuit (3), wherein
when a temperature detected by the third temperature sensor (53) becomes equal to or lower than a predetermined temperature, the control apparatus (4) is configured to start the low temperature-side compressor (21).

3. The refrigeration cycle apparatus according to claim 1 or 2, further comprising a second superheat degree detecting means (62) which detects a superheat degree of a refrigerant flowing out from the cascade heat exchanger (22) in the high temperature-side refrigerant circuit (3), wherein
the control apparatus (4) is configured to control a flow rate of the high temperature-side refrigerant flowing through the high temperature-side expanding means (33) such that the superheat degree detected by the second superheat degree detecting means (62) becomes equal to a predetermined second superheat degree.

4. A hot water producing apparatus using the refrigeration cycle apparatus (1A) according to any one of claims 1 to 3, wherein
the heating medium is water or antifreeze liquid, and the water or the antifreeze liquid heated by the high temperature-side heat exchanger (32) is utilized for hot water supply and/or a room-heating.

## Patentansprüche

1. Kühlzyklusvorrichtung (1A), umfassend:
einen niedertemperaturseitigen Kältemittelkreis (2), enthaltend einen niedertemperaturseitigen Kompressor (21), der ein niedertemperaturseitiges Kältemittel komprimiert, einen Kaskaden-Wärmeaustauscher (22), der als ein Radiator des niedertemperaturseitigen Kältemittels fungiert, eine niedertemperaturseitige Expansionseinrichtung (23) und einen niedertemperaturseitigen Wärmeaustauscher (24), der als ein Verdampfer des niedertemperaturseitigen Kältemittels fungiert;
einen hochtemperaturseitigen Kältemittelkreis (3), enthaltend einen hochtemperaturseitigen Kompressor (31), der ein hochtemperaturseitiges Kältemittel komprimiert, einen hochtemperaturseitigen Wärmeaustauscher (32), der als ein Radiator des hochtemperaturseitigen Kältemittels fungiert, eine hochtemperaturseitige Expansionseinrichtung (33) und den Kaskaden- Wärmeaustauscher (22), der durch Strahlung des niedertemperaturseitigen Kältemittels als ein Verdampfer des hochtemperaturseitigen Kältemittels fungiert;
einen ersten Temperaturfühler (51), der eine Temperatur des hochtemperaturseitigen Kompressors (31) oder eine Temperatur einer hochdruckseitigen Kältemittelrohrleitung (36) misst, die sich zum hochtemperaturseitigen Wärmeaustauscher (32) erstreckt;
einen zweiten Temperaturfühler (52), der eine Temperatur eines Erwärmungsmediums misst, das Wärme mit dem hochtemperaturseitigen Kältemittel in dem hochtemperaturseitigen Wärmeaustauscher (32) austauscht; und
eine Steuerungsvorrichtung (4),
**dadurch gekennzeichnet, dass**, wenn eine durch den zweiten Temperaturfühler (52) gemessene Temperatur um eine vorgegebene Temperaturdifferenz oder mehr höher ist als eine durch den ersten Temperaturfühler (51) gemessene Temperatur, die Steuerungsvorrichtung (4) ausgelegt ist, den hochtemperaturseitigen Kompressor (31) zu starten und dann den niedertemperaturseitigen Kompressor (21) zu starten.
wobei die Kühlzyklusvorrichtung weiter umfasst
eine erste Überhitzungsgrad-Erfassungseinrichtung (61), die ein Überhitzungsgrad eines Kältemittels erfasst, das aus dem hochtemperaturseitigen Kompressor (31) im hochtemperaturseitigen Kältemittelkreis (3) abgegeben wird, und
wobei die Steuerungsvorrichtung (4) ausgelegt ist, ein Zirkulationsausmaß des hochtemperaturseitigen Kältemittels auf einen Wert gleich einem oder niedriger als ein vorgegebener Wert zu reduzieren und die Kühlzyklusvorrichtung zu betreiben, bis das durch die erste Überhitzungsgrad-Erfassungseinrichtung (61) erfasste Überhitzungsgrad ein vorgegebenes erstes Überhitzungsgrad überschreitet.

2. Kühlzyklusvorrichtung nach Anspruch 1, weiter umfassend einen dritten Temperaturfühler (53), der eine Temperatur eines niederdruckseitigen Kältemittels im hochtemperaturseitigen Kältemittelkreis (3) misst, wobei,
wenn eine durch den dritten Temperaturfühler (53) gemessene Temperatur gleich oder niedriger wird als eine vorgegebene Temperatur, die Steuerungsvorrichtung (4) ausgelegt ist, den niedertemperaturseitigen Kompressor (21) zu starten.

3. Kühlzyklusvorrichtung nach Anspruch 1 oder 2, weiter umfassend eine zweite Überhitzungsgrad-Erfassungseinrichtung (62), die ein Überhitzungsgrad eines Kältemittels erfasst, das aus dem Kaskaden-Wärmeaustauscher (22) im hochtemperaturseitigen Kältemittelkreis (3) strömt, wobei
die Steuerungsvorrichtung (4) ausgelegt ist, eine Durchflussrate des durch die hochtemperaturseitige Expansionseinrichtung (33) strömenden hochtemperaturseitigen Kältemittels so zu steuern, dass das durch die zweite Überhitzungsgrad-Erfassungseinrichtung (62) erfasste Überhitzungsgrad gleich einem vorgegebenen zweiten Überhitzungsgrad wird.

4. Warmwassererzeugungsvorrichtung, verwendend die Kühlzyklusvorrichtung (1A) nach jedem der Ansprüche 1 bis 3, wobei
das Erwärmungsmedium Wasser oder Frostschutzflüssigkeit ist und das Wasser oder die Frostschutzflüssigkeit, durch den hochtemperaturseitigen Wärmeaustauscher (32) erwärmt, für Warmwasserversorgung und/oder eine Raumheizung verwendet wird.

## Revendications

1. Appareil à cycle de réfrigération (1A) comprenant :
un circuit de réfrigérant (2) du côté à basse température comprenant un compresseur (21) du côté à basse température, qui comprime un réfrigérant du côté à basse température, un échangeur de chaleur en cascade (22) qui fonctionne en tant que radiateur du réfrigérant du côté à basse température, un moyen d'expansion (23) du côté à basse température et un échangeur de chaleur (24) du côté à basse température, qui fonctionne en tant qu'évaporateur du réfrigérant du côté à basse température ;
un circuit de réfrigérant (3) du côté à haute température comprenant un compresseur (31) du côté à haute température, qui comprime un réfrigérant du côté à haute température, un échangeur de chaleur (32) du côté à haute température, qui fonctionne en tant que radiateur du réfrigérant du côté à haute température, un moyen d'expansion (33) du côté à haute température et l'échangeur de chaleur en cascade (22), qui fonctionne en tant qu'évaporateur du réfrigérant du côté à haute température par radiation du réfrigérant du côté à basse température ;
un premier capteur de température (51), qui détecte une température du compresseur (31) du côté à haute température ou une température du tube (36) de réfrigérant du côté à haute pression s'étendant vers l'échangeur de chaleur (32) du côté à haute température ;
un second capteur de température (52), qui détecte une température d'un fluide caloporteur qui échange la chaleur avec le réfrigérant du côté à haute température dans l'échangeur de chaleur (32) du côté à haute température ; et un appareil de commande (4),
**caractérisé en ce que** lorsqu'une température détectée par le second capteur de température (52) est supérieure à une température détectée par le premier capteur de température (51) d'une différence de température prédéterminée ou plus, l'appareil de commande (4) est configuré pour démarrer le compresseur (31) du côté à haute température et, ensuite, démarrer le compresseur (21) du côté à basse température,
sachant que l'appareil à cycle de réfrigération comprend en outre
un premier moyen (61) de détection de degré de surchauffe, qui détecte un degré de surchauffe d'un réfrigérant rejeté depuis le compresseur (31) du côté à haute température dans le circuit (3) de réfrigérant du côté à haute température, et
sachant que l'appareil de commande (4) est configuré pour réduire un volume en circulation du réfrigérant du côté à haute température à une valeur inférieure ou égale à une valeur prédéterminée et pour faire fonctionner l'appareil à cycle de réfrigération jusqu'à ce que le degré de surchauffe détecté par le premier moyen de détection (61) de degré de surchauffe dépasse un premier degré de surchauffe prédéterminé.

2. Appareil à cycle de réfrigération selon la revendication 1, comprenant en outre un troisième capteur de température (53), qui détecte une température d'un réfrigérant du côté à basse pression dans le circuit (3) de réfrigérant du côté à haute température, sachant que
lorsqu'une température détectée par le troisième capteur de température (53) devient inférieure ou égale à une température prédéterminée, l'appareil de commande (4) est configurée pour démarrer le compresseur (21) du côté à basse température.

3. Appareil à cycle de réfrigération selon la revendication 1 ou 2, comprenant en outre un second moyen (62) de détection de degré de surchauffe, qui détecte un degré de surchauffe d'un réfrigérant s'échappant de l'échangeur de chaleur en cascade (22) dans le circuit (3) de réfrigérant du côté à haute température, sachant que
l'appareil de commande (4) est configurée pour commander un débit du réfrigérant du côté à haute température circulant à travers le moyen d'expansion (33) du côté à haute température de sorte que le degré de surchauffe détecté par le second moyen (62) de détection de degré de surchauffe deviennent égal à un second degré de surchauffe prédéterminé.

4. Appareil de production d'eau chaude utilisant l'appareil à cycle de réfrigération (1A) selon l'une quelconque des revendications 1 à 3, dans lequel
le fluide caloporteur est de l'eau ou un liquide antigel, et l'eau ou le liquide antigel chauffé par l'échangeur de chaleur (32) du côté à haute température est utilisé pour l'approvisionnement en eau chaude et/ou le chauffage de locaux.
